# EUROPÄISCHE PATENTSCHRIFT

(11) **EP 2 566 666 B1**
(45) Veröffentlichungstag und Bekanntmachung des Hinweises auf die Patenterteilung: **13.08.2014**
(21) Anmeldenummer: 11728171.7
(22) Anmeldetag: 02.05.2011
(51) Int. Cl.: B25F 5/00, B25F 5/02

(54) **KOPPELBARER ANTRIEB**
COUPLEABLE DRIVE
DISPOSITIF D'ENTRAÎNEMENT POUVANT ÊTRE ACCOUPLÉ

(30) Priorität: 03.05.2010 CH 6622010
(43) Veröffentlichungstag der Anmeldung: 13.03.2013
(73) Patentinhaber: Müller, Peter A., 8136 Gattikon (CH)
(72) Erfinder: Müller, Peter A., 8136 Gattikon (CH)
(74) Vertreter: Isler, Jörg
(86) Internationale Anmeldenummer: PCT/CH2011/000099
(87) Internationale Veröffentlichungsnummer: WO 2011/137549

(56) Entgegenhaltungen:
- EP-A1- 1 703 619
- EP-A1- 1 832 392
- EP-A2- 1 323 501
- GB-A- 2 462 938

## Beschreibung

### Technisches Gebiet

Die Erfindung geht aus von einem wasser- und partikeldichten Elektrowirkmittel, ausgestaltet mit einem Basisantrieb, welches mittels eines verriegel-baren Schnellverschlusses, sich damit mit wenigen Handgriffen diverse technische Module koppeln lassen, um auf diese Weise das Wirkmittel zusätzlich als Hub-, Schwenk- oder Drehmedium nutzen zu können, nach dem Oberbegriff des ersten Anspruchs.

### Stand der Technik

Aufgrund diversen Hublängenanforderung und Schubkräfte, sowie den technischen Ausstattungen und entsprechenden IP Schutzarten, sind am Markt spezifisch entwickelte Zylinder oder Schwenkmittel oder Dreh-mittel als in sich geschlossene Einheiten bekannt, welche zu einer Unmenge von Artikelnummern und entsprechenden Lagerhaltungen an Zylinder, Schwenk- und Drehmittel führt, resp. deshalb oft nur halbgefertigte Produkte zu Verfügung stehen, welche entsprechend den Aufgabenstellungen noch fertigt hergestellt und montiert werden müssen.

Die EP 1 323 501 offenbart einen Basisantrieb mit koppelbarem Modul.

### Darstellung der Erfindung

Der **Erfindung**liegt die Aufgabe zugrunde, einen multifunktionalen Zylindertyp zu gestalten, welcher vom Endkunden gemäss seinen Bedürfnissen mit wenigen Handgriffen mittels eines verriegelbaren Schnellverschlusses vor Ort gemäss den gewünschten Aufgaben adaptiert werden kann und mehr Funktionen zulässt als nur einen Hub abzufahren, nämlich auch als Schwenk- und Drehmittel genutzt werden kann. Entsprechende Module können produktübergreifend dieselben sein und sparen somit Kosten und Lagerhaltung. Zugleich ist der Zylinder in der Basisform schon auf eine hohe IP Schutz ausgelegt und die Kabel haben vorkonfektionierte Längen, an denen einfache Steckerverbindungen angebracht sind, welche ebenfalls verriegelbare und wasserdichte Schnellverschlüsse aufweisen.

Erfindungsgemäss werden ein Elektromotor und ein Getriebe als Basismittel in einen Zylinderkörper wasserdicht verpackt, um daran einen wasserdichten Strom- und Sensorstecker, eine Luftführung und eine Kopplung anzubringen, an welche diverse technische Mittel in verschiedenen Ausführungen passgenau und sicher befestigt und angetrieben werden können. Die Basis stellt ein Antriebskörper dar, welcher mittels eines Schnellverschlusses somit diverse Spindellängen mit entsprechenden Hüben als Aufsteckmodule zu Verfügung stellt und damit einen abgestimmten Hubzylinder darstellt, sodass der Kunde eine bestimmte Hublänge mit wenigen Handgriffen mit einem entsprechend leistungsfähigen Antrieb koppeln kann. Das Ganze ist ausbaufähig, indem der Kunde mit einfachen Manipulationen an vorgesehene Ausnehmungen in den koppelbaren Moduln z.B. einen Hubsensor oder Kraftsensor, oder ein Zwischenmodul einfügen kann, sodass zwei Antriebe eine Kolbenstange bewegen oder das Modul statt einer Hubbewegung, eine Drehbewegung ausführt oder andere Mittel sich dazwischen einlegen lassen, wie z. B. Winkelgetriebe, Sperrmittel und andere Komponenten und die mit einem Schnellverschluss fluchtend, verdrehsicher und dicht gehalten werden können.

Mittels der entsprechenden Dichtung und Dichtungslagerung am Grundgehäuse, welches den Elektromotor und die Anschlüsse aufnimmt, ist sichergestellt, dass die elektrischen Komponenten wasserdicht verpackt sind und, selbst wenn im ungünstigsten Fall die daran gekoppelten Module undicht sein würden und der Zylinder dabei unter Wasser getaucht wäre, dies noch keinen Ausfall des Gerätes bedeuten würde.

Mittels eines am Antriebskörper angebrachten Köchers, welcher als Gefäss für Gasfedern - Druck- oder Zugfedern - dient, kann auf einfache Weise eine höhere Kraft eines gegebenen Antriebs erzeugt werden, sei dies um eine Last zu Heben oder Hochzuziehen. Blockierbare Gasfedern lassen sich ebenfalls in das Gefäss platzieren, sodass ein solcher Antrieb äusserst effizient blockierbar wird und eine entsprechende Sicherheit einer angewählten und gehaltenen Hubstellung gewährleistet werden kann.

Erfindungsgemäss wird dies durch die Merkmale des ersten Anspruches erreicht.

Kern der Erfindung ist, einen hochwertigen Basisantrieb mit einer hohen Schutzart mit verschiedenen technischen Modulen als Funktionsträger in entsprechenden Ausführungen mit wenigen Handgriffen sicher und passgenau zu vervollständigen und mit weiteren anschliessbaren Moduln eine zusätzliche Leistung erbringen zu können.

Weitere vorteilhafte Ausgestaltungen der Erfindung ergeben sich aus den Unteransprüchen.

### Kurze Beschreibung der Zeichnungen

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1: eine schematische Seitenansicht eines Basisantriebskörpers mit den Dichtstellen, dem Koppelmittel und ein koppelbares, abdichtbares Modul
- Fig. 2: eine schematische Seitenansicht eines Basisantriebskörpers mit der Motor- und Getriebeposition, dem Koppelmittel, dem integrierten Sensor und der Kabelführung sowie einen wasserdichten elektrischen Kontaktierungen, ein in den Kabelanschluss einfügbaren Controller als auch ein Spindelantrieb mit Luftdruckkompensation und Koppelmittel zum Basisantriebskörpers
- Fig. 3: eine schematische Seitenansicht eines Untersetzungsgetriebes und Koppelmittel zum Basisantriebskörpers, sowie Anschluss zu einem weiteren Modul
- Fig. 4: eine schematische Seitenansicht einer elektromechanischen Verriegelung mit Notsperre und Koppelmittel zum Basisantriebskörpers, sowie Anschluss zu einem weiteren Modul
- Fig. 5: eine schematische Seitenansicht eines Umkehrgetriebes und Koppelmittel zum Basisantriebskörpers, sowie Anschluss zu einem weiteren Modul und einem separaten Befestigungsauge
- Fig. 6: eine schematische Seitenansicht eines Drehantriebes zur Aufnahme eines Schwenkhebels oder einer Rolle und Koppelmittel zum Basisantriebskörpers
- Fig. 7: eine schematische Seitenansicht eines Basisantriebskörpers mit einer Solarzellenhülle, verbunden mit einem Kondensator, einem Akkumulator, sowie einem Hohlspiegel und Fernbedienung
- Fig. 8: eine schematische Seitenansicht eines Sensormoduls mit dem Wegmesssensor und Aufnehmer und der Kontaktierung
- Fig. 9: eine schematische Seitenansicht einer Schnellkupplung mittels eines unterbrochenen Gewindes am Basisantrieb und am koppelbaren Modul
- Fig. 10: eine schematische Seitenansicht einer Schnellkupplung mittels eines Bajonettverschlusses am Basisantrieb und am koppelbaren Modul
- Fig.11: eine schematische Seitenansicht eines koppelbaren Moduls in Form einer Gartenschere mit einem beweglichen Messer
- Fig. 12.: eine schematische Aufsicht auf ein Doppelmodul mit einem Basisspindelantrieb und daneben eingelassenen Gasfeder.

Es sind nur die für das unmittelbare Verständnis der Erfindung wesentlichen Elemente schematisch gezeigt.

**Weg zur Ausführung der Erfindung**

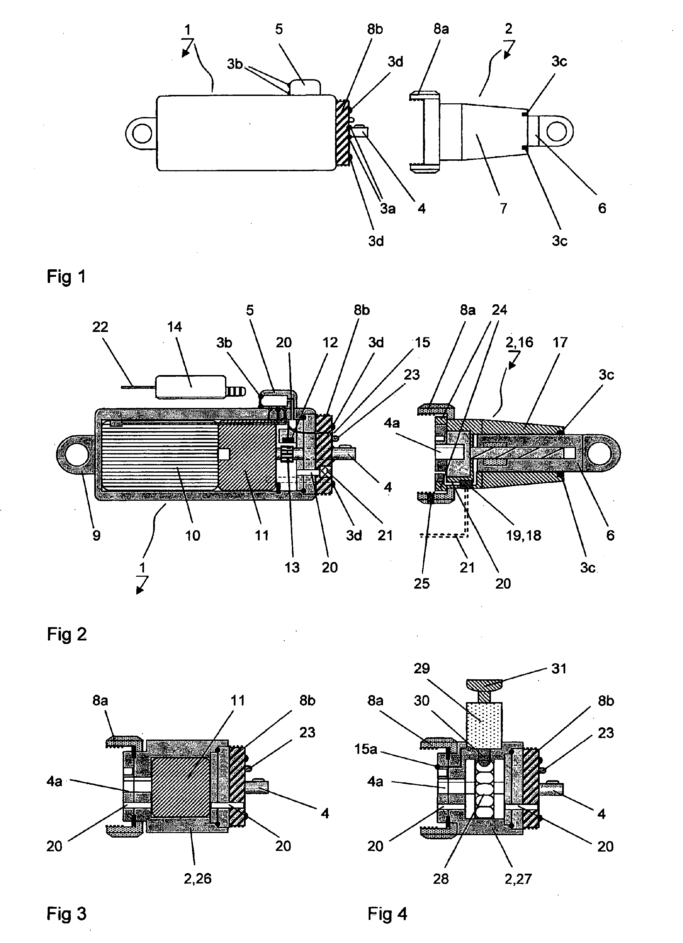

- Fig. 1: zeigt eine schematische Seitenansicht eines modularen Basisantriebs 1, der ein Basiszylinderkörper darstellt und ein Modul 2 aufweist, wobei der Basisantrieb 1 vollumfänglich gegen Wassereintritt oder Luftpartikel mittels einer entsprechenden Dichtung 3a an der Abtriebswelle 4 und Dichtung 3b an der Kabeleinführungsstelle 5 gedichtet ist. Am Modul 2, hier gezeigt in der Version einer Hubspindel, befindet sich zwischen Kolbenstange 6 und Führungsgehäuse 7 eine Dichtung 3c und zwischen dem Basisantrieb 1 und Modul 2 eine weitere Dichtung 3d. Basisantrieb 1 und Modul 2 wird durch den Schnellverschluss 8a,b verbunden und stellt damit ein funktionstüchtiges Gerät dar.
Elektrozylinder haben ein breites Einsatzspektrum und damit wird eine Vielzahl von Hublängen und Schubkräften und Hubgeschwindigkeiten vom Markt verlangt. Im Weiteren braucht es in gewissen Anwendungsbereichen möglicher-weise nur gerade einen einfachen Hubantrieb, in anderen wiederum wird eine Wegmessung verlangt oder eine Bremse oder eine Verriegelung der Hubstellung. Dies führt zu einer komplexen Bereitstellung an Elektrozylindem, wobei ein grosser Teil von solchen Hebeverfahren die gleichen Hübe aufweisen, andere wiederum haben eine identische Leistungsnachfrage, sodass es sinnvoll ist, diese modular aufzubauen und damit einen Grossteil des Marktes mit standardisierten technischen Moduln zu bedienen, bis hin zum Hobbymarkt, bei welchem der Basisantrieb 1 und viele weitere Module 2 aus glasfaserverstärktem Kunststoff sein können. Zentral ist die einfache Handhabung und Zusammenbau eines solchen Gerätes, sowie einen hohen Dichtschutzgrad, um das Gerät im Aussen- wie Innenbereich identisch verwenden zu können. Ebenfalls kann es sein, dass in einer Applikation eine divergierende Anforderung auftritt und mittels der Modularität mit wenigen Handgriffen die Aufgabe professionell gelöst werden kann, z.B. das Koppeln eines Moduls mit zwei Motoren und quasi die doppelte Leistung an einen Spindelhub weiterleitet, oder ein Modul, welches eine Schwenkbewegung erlaubt oder eine Drehbewegung ausführt und damit eine Rolle oder Kettenrad antreibt.

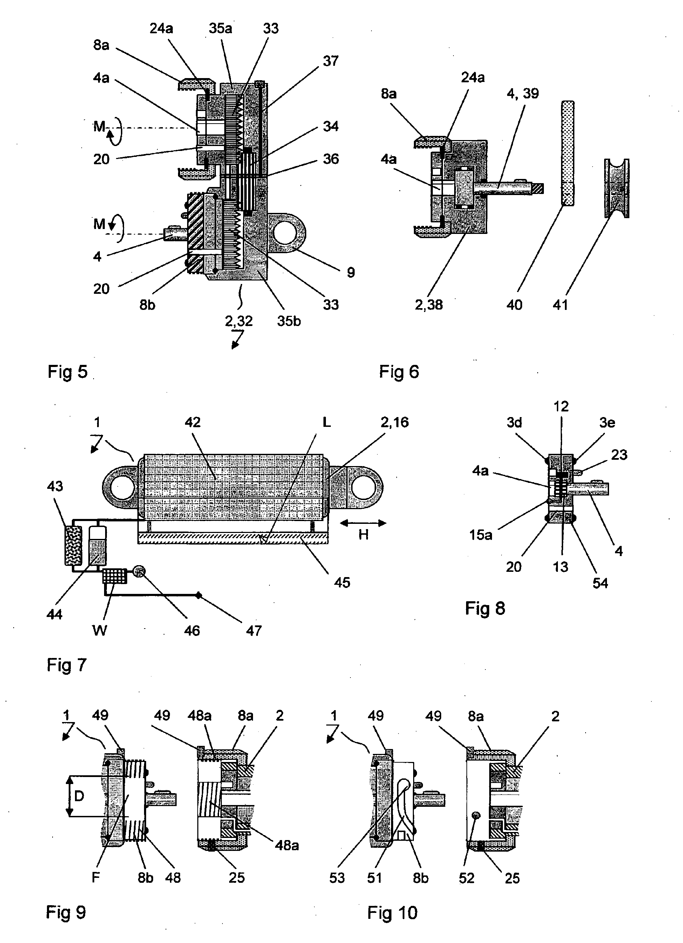

- Fig. 2: zeigt eine schematische Seitenansicht eines modularen Basisantriebs 1, der ein Basiszylinderkörper darstellt mit dem Befestigungsauge 9, der Einbaulage des Motors 10 und des Getriebes 11, ein im Basisantrieb 1 integrierter Wegmesssensor 12, in Form eines Hallgebers oder Induktivgebers, mit dem Wegaufnehmer 13 mit welchem z.B. die Umdrehungszahl an der Abtriebswelle 4 gemessen wird und das Signal mittels der Kabeleinführungsstelle 5 an den Controller 14 zur Verarbeitung weitergeleitet wird oder der Wegmesssensor 12 als Seilzuggeber, welcher dann mit der im Modul 2 eingelagerten Kolbenstange 6 verbunden wird. Der Wegmesssensor 12 wird im Normalfall in eine entsprech-ende Kontaktstelle eingeschoben und festgehalten oder im Modul 2 zusammen mit dem Wegaufnehmer 13 integriert, wobei in diesem Fall am Basisantrieb 1 eine aussenliegende Kontaktstelle 15 angebracht ist, sodass beim Zusammenführen des Basisantriebs 1 und des Spindelhubmoduls 16, der Wegmesssensor 12 kontaktiert wird. In Fig 8 wird die Variante eines Wegmesssensors 12 und Wegaufnehmer 13 als Sensormodul, welches dazwischengeklemmt wird, aufgezeigt. Zugleich wird beim Zusammenführen des Basisantriebs 1 und des Spindelhubmoduls 16 die Dichtung 3d aktiviert, sodass der Innenraum des Moduls 2, hier dargestellt als Spindelhubmodul 16, mit der Wellenaufnahme 4a, dem Spindelantrieb 17 und der Kolbenstange 6, an welcher die Dichtung 3c angebracht ist, der Gesamtraum vor äusseren Einflüssen gedichtet ist. Eine solche Dichtung funktioniert nur dann einwandfrei, wenn gleichzeitig der Innenraum des Spindelhubmoduls 16 drucklos gehalten wird. Dies wird erreicht, indem im Spindelhubmodul 16 eine Öffnung 18 vorhanden ist, an der ein hydrophober Filter 19 angebracht ist, oder ein Kanal 20 vorgesehen ist, welcher den variierenden Luftdruck, der entsteht, wenn die Kolbenstange 6 ein- oder ausfährt, an den Basisantrieb 1 mittels des Kanals 20 bis zum Austritt an der Kabeleinführungsstelle 5 weitergeführt wird, an dem ein hier nicht dargestellter Luftschlauch montiert ist und so z.B. über der Wasserlinie oder in eine staubfreie Zone geleitet wird. Am Ende des Luftschlauchs kann sich ebenfalls ein Filter 19 oder ein Faltenbalg befinden, um sicherzustellen, dass kein Wasser oder Schmutzpartikel in den Luftschlauch gelangen. Dieser Schlauch stellt auch sicher, dass die Temperatur des Motors 10 und des Getriebes 11 abgeführt werden kann. Auch am Basisantrieb 1 kann sich ein Filter 19 befinden, um sicherzustellen, dass bei Leckage eines Moduls 2 auch dort kein Wasser oder Schmutzpartikel in das Innere ein-dringen können, welche das Getriebe 11 oder den Motor 10 beschädigen würden. Es ist auch denkbar, dass am Spindelhubmodul 16 am Filter 19 ein Schlauch 21 angebracht werden kann, welcher als Schnorchel dient und so den Druckausgleich im Innenraum des Spindelhubmoduls 16 bewirkt, wobei auch die Druckdifferenzen aus Temperaturschwankungen ausgeglichen werden.
Die Kabeleinführungsstelle 5 kann eine lösbare Verbindung sein, entsprechend der bekannten Gattung von wasserdichten Steckern und ebenso kann an gleicher Stelle ein entsprechend gedichteter Controller 14 dazwischen eingeschoben und befestigt werden, sowie die Stromleitung 22 an die Stromquelle ausgeführt werden.
Ein zentrales Element der Erfindung ist die Kopplung von Basisantrieb 1 mit dem Modul 2, indem die Teile und mittels einer, hier nicht dargestellten Führung, zueinander zentriert und den gegenseitigen Stirnseiten fluchtend zugeführt werden, dabei der Dichtring 3d konform zusammengepresst wird, der Verdrehsicherungsstift 23 ein Verdrehen des Moduls 2 unterbindet und zugleich Basisantrieb 1 und Modul 2 zueinander ausrichtet, auch unter Berücksichtigung der Kontaktstelle 15.
Der Schnellverschluss 8a,8b besteht aus einer Überwurfmutter 8a, welche sich an die Schulter 24 des Spindelhubmoduls 16 festzieht und entweder eine Schnellverschraubung wie in Fig 8 oder einen Bajonettverschluss wie in Fig 9 darstellt, sodass z.B. mit einer Vierteldrehung in das Aufnahmeprofil 8b des Basisantriebs 1, das Spindelhubmodul 16 damit verdrehsicher und wasserdicht gekoppelt werden kann und mittels der Sicherheitsschraube 25 bei starken Vibrationen oder ähnlichem bis hin zur einem unbeabsichtigten Lösen der Koppelung, zusätzlich sichert.
- Fig. 3: zeigt eine schematische Seitenansicht eines Untersetzungsgetriebes 26, welche an einer Seite die Überwurfmutter 8a und auf der gegenüberliegenden Seite das Aufnahmeprofil 8b des Schnellverschlusses 8a,8b aufweist. Dieses Modul stellt ein Zwischenelement dar, um bei einem Antrieb die Untersetzungsverhältnisse mittels eines zusätzlichen Getriebes 11 zu ändern, wobei der Verdrehsicherungsstift 23 und der Kanal 20 mitintegriert sind.
- Fig. 4: zeigt eine schematische Seitenansicht einer elektromechanischen Verriegelung 27, welche an einer Seite die Überwurfmutter 8a und auf der gegenüberliegenden Seite das Aufnahmeprofil 8b des Schnellverschlusses 8a,8b aufweist. Das Modul weist zwischen der Wellenaufnahme 4a und Wellenausgang 4 ein Sperrrad 28 auf, welches mittels eines im Hubmagnet 29 integrierten Sperrstiftes 30 gesperrt wird, ausgelöst durch einen Stromimpuls, welcher mittels einer Stromverbindung an den Kontaktanschlag 15a reicht. Fällt die elektrische Verriegelung aus, so ist am Hubmagnet 29 eine manuelle Notsperre 31 angebracht. Dieses Modul erlaubt z.B. einen Spindelhubmodul 16 in einer gewünschten Position nicht nur zu halten, sondern die Position zu sperren. Ein solcher Stromimpuls wird vorteilhaft vom Controller 14 ausgelöst oder kann in einfachen Applikationen auch zeitlich und durch das Ein-, resp. Ausschaltung des Motors 10 ausgelöst werden. Das Sperrrad 28, kann radial als auch axial von einem Hubmagnet 29 mit seinem Sperrstift 30 bedient werden und kann auch eine Klinkensperre beinhalten, sodass nur in eine Richtung gesperrt wird.
- Fig. 5: zeigt eine schematische Seitenansicht einer Umlenkung 32, welche an einer Seite die Überwurfmutter 8a, hier statt gegen die Schulter 24, gegen den Seegerring 24a sich verspannt und auf der gegenüberliegenden Seite das Aufnahmeprofil 8b des Schnellverschlusses 8a,8b aufweist. Das Modul erlaubt den Motor 10 parallel z.B. zum Spindelhubmodul 16 zu fixieren, sodass eine Verkürzung der Gesamtanlage erreicht wird und die Schub- resp. Zugkräfte einerseits auf dem Befestigungsauge 9 an der Kolbenstange 6 und anderseits in der gleichen Ebene zum Befestigungsauge 9 an der Umlenkung 32 liegt. Das Drehmoment M wird mittels des Zahnradsatzes 33 und Verbindungszahnrades 34 an die Abtriebswelle 4 als Drehmoment M1 weitergeleitet. In dieser Konfiguration ist das Modul zweigeteilt, bestehend aus einem oberen Teils 35 und einem unteren Teil 35a und mittels des Drehkranzes 36 gelagert und gehalten, sodass nicht nur die Kraft parallel von einer Ebene zur nächsten Ebene geführt werden kann, sondern dass der Basisantrieb 1 querab, z.B. um 90°, verdreht zum Spindelhubmodul 16 stehen kann und mittels der Winkelsperre 37 das Modul fixiert wird. Hier nicht gezeigt sind die entsprech-enden Lagerelemente und Dichtmittel. Ist nur eine Kraftumlenkung gewünscht, so ist das Modul einteilig und die beiden Zahnradsätze 33 lassen sich direkt ineinander kämmen.
- Fig. 6: zeigt eine schematische Seitenansicht eines Drehmoduls 38, welches an einer Seite die Überwurfmutter 8a und auf der gegenüberliegenden Seite das Aufnahmeprofil 8b des Schnellverschluss 8a,8b aufweist. Das Drehmodul 38 hat eine Aufnahme 39, damit lassen sich ein Schwenkhebel 40 oder eine Rolle 41 und ähnliches daran befestigen. Insbesondere in Verbindung mit dem Wegmesssensor 12 kann ein bestimmter Winkelweg bestritten werden und mittels des Controllers 14 an der gewünschten Stelle gestoppt und in die Gegenrichtung gefahren werden oder eine Rolle 41 oder Kettenrad soll mit einer bestimmten Drehzahl rotieren, die Kombinationen mit den Modulen und dem darauf abgestimmten Controller 14 sind mannigfaltig.
- Fig. 7: zeigt eine schematische Seitenansicht eines modularen Basisantriebs 1 und das Modul 2, welches hier ein Spindelhubmoduls 16 darstellt mit einem Hub H, gemäss Pfeil H und eine um die beiden Module aufgesetzte Solar-zellenhülle 42, welche mit einem Kondensator 43 oder einem Akkumulator 44 verbunden ist, sowie einen Hohlspiegel 45 und eine Fernbedienung 46 aufweist.
Ein solcher koppelbarer Zylinder ist ideal z.B. in schwer zugänglicher Umgebung wie z.B. etwa zum Öffnen und Schliessen von Dachluken und wo auch das Verlegen von elektrischen Leitungen kostspielig oder optisch nicht vertretbar ist. Ein solcher Hubzylinder ist autonom, indem der Strom für die Steuerung zum Öffnen und Schliessen eines Mittels, mittels Solarmodule erbracht wird. Um nicht ein grosses Panel einzusetzen, insbesondere wenn das Mittel ein Fenster ist, welches möglichst viel Licht in einen Innenraum einbringen soll, ist das Solarmodul als Zylinder ausgeführt und die dem Licht abgewandte Seite erhält das Licht mittels eines Hohlspiegels 45, welcher den Lichteinfall L gemäss Pfeil L auf die schattenseitige Solarzellenhülle 42 zurückwirft. Der Hohlspiegel 45 kann Prismen oder ähnliches aufweisen, sodass das Licht bei jedem Lichteinfall optimal auf die Solarzellenhülle 42 zurückgeworfen wird. Die in den Solarmoduln entstehende Energie wird entweder an einen Kondensator 43 weitergeleitet, welcher den Strom kurzfristig speichern kann und wenn eine grössere Speicherung des Stroms gefragt ist, in einen Akkumulator 44. Die Energie wird für die Betätigung des Motors 10 im Basisantrieb 1 und evt. für die Entriegelung der Hubsperre gebraucht oder und für die Sensoren 47, wie z.B. Wegmesssensor oder Regensensor und ähnliches, sowie für den Sende/Empfänger der Fernbedienung 46, sodass über Funk oder Lichtwellen der Zylinder manuell oder automatisch im Zusammenspiel mit mehreren anderen Zylindern angesteuert werden kann, welche beispielhaft an Lichtluken angebracht sind, um z.B. mehr Luft in einen Raum einzubringen oder im Gegenteil, die Lichtluken bei Regen oder Kälte zu schliessen. Ein Stromwächter W koordiniert den Strom-fluss und kann Teil einer übergeordneten Vernetzung von verschiedenen Aktoren sein.
- Fig. 8: zeigt eine schematische Seitenansicht eines Sensormoduls 54 mit dem Wegmesssensor12 und dem Wegaufnehmer 13, sowie dem Kontaktanschlag 15a. Das Sensormodul 54 kann als Sandwich zwischen dem Basisantrieb und einem der Module 2 dazwischengesetzt werden, mittels dem Verdrehsicherungsstift 23 und nicht gezeigten Führungselementen zentriert und mittels der Dichtung 3d, sowie der Dichtung 3e, welche als O-Ring ausgestaltet sind und innerhalb der O-Ringe sich die elektronischen Bauteile befinden, als auch der Kontaktanschlag 15a. Hierfür ist ein nicht gezeigtes verlängerte Überwurfmutter 8a nötig, welche auch für andere "Sandwich" Module verwendbar ist, um ein Modul 2 mit dem Basisantrieb 1 zu koppeln.
- Fig. 9: zeigt eine schematische Seitenansicht eines Schnellverschlusses 8a,8b mit einem unterbrochenen Gewinde 48 mit der Unterbrechungsdistanz D am Basisantrieb 1 und am koppelbaren Modul 2 und den Markierungen 49. Obwohl eine Überwurfmutter 8a mit einem normalen Gewinde ebenso eine Kopplung zwischen einem Basisantrieb 1 und einem Modul 2 leisten würde, ist es trotzdem der Wunsch des Marktes mit wenig manuellem und zeitlichem Aufwand einen Zusammenschluss von Teilen zu erwirken, aber auch die Sicherheitsschraube 25, als zusätzliches Sicherungselement, gegen das abgeflachte Teil F, welches das Gewinde 48 unterbricht, zu haben und die Sicherheitsschraube 25 somit nicht in das Gewinde 48 drückt. Entsprechend der Unterbrechungsdistanz D ist in der Überwurfmutter 8a ein fast so breites Teilgewinde 48a eingelassen, sodass dieses in die Lücke der Unterbrechungsdistanz D passt und dort hineingeschoben werden kann, damit die Überwurfmutter 8a möglichst nahe an das Aufnahmeprofil 8b am Basisantrieb 1 herankommt und z.B. mittels einer Viertelumdrehung an der Überwurfmutter 8a, der Basisantrieb 1 und das Modul 2 elegant gekoppelt werden kann. Markierungen 49 an den beiden Teilen des Schnellverschlusses 8a,8b weisen den Weg an welcher Stelle eingeschoben werden soll und zeigen auch an, ob die Überwurfmutter 8a gedreht wurde. Die Überwurfmutter 8a kann verschiedene Längen aufweisen, sodass damit ein oder mehrere Module 2 mit einer solchen Mutter verbunden und gehalten werden kann.
- Fig. 10: zeigt eine schematische Seitenansicht eines Schnellverschlusses 8a,8b mit einem Bajonettverschluss 50 mit einer Bajonettführung 51 am Basisantrieb 1 und Bajonettnocken 52 am koppelbaren Modul 2 und den Markierungen 49.
Der Bajonettverschluss 50 ist die ideale Kopplung für die beschriebenen Elemente, da ein Überdrehen der Überwurfmutter 8a nicht gegeben ist und mittels einer Ausnehmung 53 in der Bajonettführung 51 kann ein Einschnappen des Verschlussvorgangs gespürt und gehört werden, indem der Gummi der Dichtung 3d komprimiert wird und am Anschlag des Verschlussvorganges quasi zurückfedert und damit Gewissheit gibt, dass der Bajonettverschluss 50 eingerastet ist. Zugleich ist auch der Ort wo die Sicherheitsschraube 25 am Aufnahmeprofil 8b auftrifft, genau definiert. Damit das Ganze funktioniert, braucht es in der Überwurfmutter 8a einen entsprechenden Bajonettnocken 52, welcher in die Bajonettführung 51 eingreift und damit den Verschlussvorgang ermöglicht. Es ist sinnvoll den Bajonettverschluss 50 mit mindestens zwei Bajonettführungen 51 und Bajonettnocken 52 auszustatten, um damit eine gleichmässige Spannung im Verschluss zu ermöglichen. Die Überwurfmutter 8a kann verschiedene Längen aufweisen, sodass damit ein oder mehrere Module 2 mit einer solchen Mutter verbunden und gehalten werden kann.

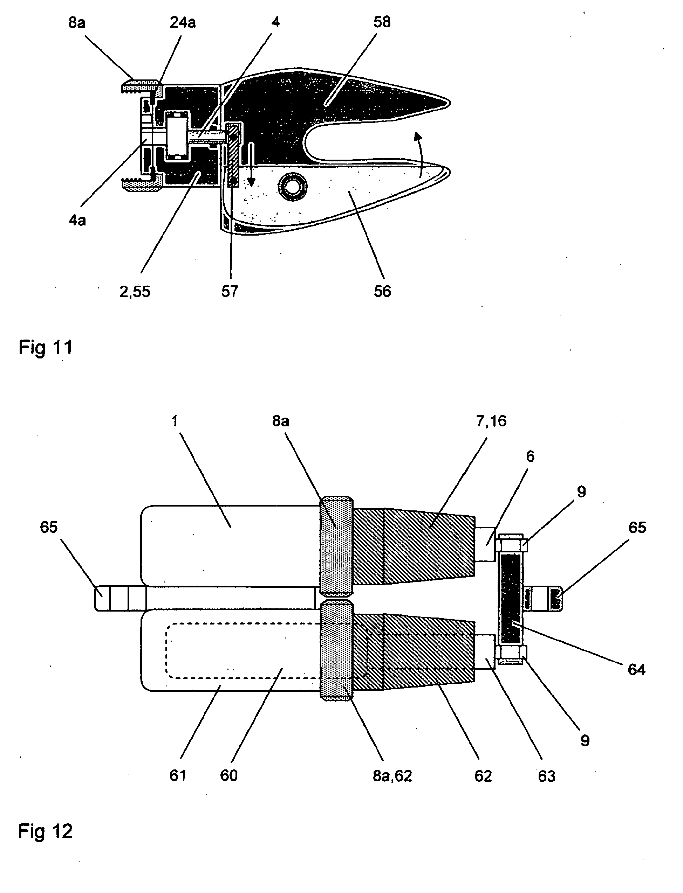

- Fig.11: zeigt eine schematische Seitenansicht eines koppelbaren Moduls 2 in Form einer Gartenschere 55 mit einem beweglichen Messer 56. Die in Fig. 6 angezeigte Lösung für eine Drehbewegung lässt sich auch für ein Gartenmesser oder für eine Klemmzange verwenden, wobei ein Controller 14 und ein Wegmesssensor 12 dazugepackt werden muss, sodass die Antriebswelle 4 nur einen limitierten Schwenkhub tätigt und danach wieder zurück in die Grundstellung schwenkt. Für die Schneid- oder Klemmbewegung bedarf es hierzu eines Schwenkhebels 40, das z.B. einen kardanisch drehgelagerten Schieber 57 betätigt und auf der Gegenseite am Messer 56 befestigt ist, welches sich seinerseits drehgelagert an der Schneidplatte 58 befindet und damit zum Schneiden schwenken kann. Denkbar ist eine Lösung mit einer kleinen Spindel an der Abtriebswelle 4, welche einen konischen Drücker betätigt, welcher damit das Messer 56 zur Schwenkfunktion führt.
- Fig. 12.: zeigt eine schematische Aufsicht auf einen Doppelträger 59, welcher den Basisantrieb 1 aufnimmt, sowie daneben eine Gasfeder 60 integriert hat.
In den meisten Applikationen von solchen koppelbaren Antrieben hat dieser eine einseitige Aufgabe zu verrichten, nämlich eine Last zu heben, oder eine Last in eine seitliche Richtung zu bewegen. Für die Rückführung in die Ausgangsposition braucht es bei horizontalen Bewegungen wenig Kraft, meist nur gerade um die Reibung zu überbrücken, bei vertikalen Bewegungen braucht es theoretisch keine Kraft, da die Schwerkraft das Nötige beiträgt, aber in den meisten Fällen braucht es eine Kraft um die Rückführung abzubremsen und sachte an die Ausgangsposition zu fahren. Um ein bestimmtes Gewicht in einer vorgegebenen Zeit zu heben, wird deshalb der Motor zum Getriebe und zur Spindel entsprechend ausgerichtet, wobei z.B. kleine Anlagen, welche mit 12 / 24 V betrieben werden, keine hohen Drehmomente übertragen und damit die Hubkraft bei 1000 N bei 1 cm/sec und selbsthemmender Spindel schon ein guter Wert darstellt. Ist nun z. B. eine 60% höhere Hubkraft bei gleicher Hubgeschwindigkeit gefragt, wird ein derartiger Spindelantrieb baulich wesentlich grösser und weist eine völlig andere Auslegung von Motor, Getriebe und Spindelauslegung auf.
Mittels des Doppeiträgers 59, welcher einerseits den gesamten Basisantrieb 1 beinhaltet und seitlich daran ein köcherartiges Gefäss 61 aufweist, in welche eine Gasfeder 60 platziert werden kann, lässt sich die Hebekraft fast verdoppeln. Die Gasfeder, z.B. eine Gasdruckfeder, unterstützt damit die Hebeoperation besser als eine konventionelle Feder, welche eine steile Federprogression aufweist, während Gasfedern eine flache Federprogression aufweisen. Damit entlastet die Gasfeder 60 den Motor 10, Getriebe 11 und Spindelantrieb 17 beim Heben, dafür müssen die obgenannten Komponenten beim Zurückfahren in die Ausgangsposition Arbeit leisten, welche unter dem Strich positiv wirkt, denn das System muss nicht gebremst werden und kann wesentlich höhere Lasten heben. Im Weiteren kann die Gasfeder 60 mit einer hier nicht gezeigten Blockiervorrichtung, welche als solches bekannt ist, ausgestattet werden, womit ein eingestellter Hub sicher gehalten wird und auf die massiv kraftkostende selbsthemmende Spindel in den meisten Fällen verzichtet werden kann und damit lässt sich Motor 10, Getriebe 11 entsprechend noch kleiner wählen. Selbstverständlich kann auch eine Gaszugfeder eingesetzt werden, um statt eine Last zu heben, in einem solchen Fall eine Last hochzuziehen.
Die Gasfeder 60 wird somit in das Gefäss 61 eingeschoben und mittels der Federabdeckung 62 dort sicher gehalten. Damit das Ganze funktioniert, ist die Kolbenstange 6 des Spindelhubmoduls 16 mit der Gasfederkolbenstange 63 mittels des Synchronisationsgestänges 64 fest verbunden. An diesem ist mittig zudem ein Zentralbefestigungsauge 65 angebracht. Ein solches Zentralbefestigungsauge 65 befindet sich auch am Ende des Doppelträgers 59.

Mittels des vollumfänglich gedichteten Basisantriebs 1 sind zahllose andere Verbindungen mit Modulen 2 denkbar, welche verdrehsicher, rasch auswechselbar und einfach nachrüstbar sind, wie z.B. ein Modul welches zwei Motoren aufnimmt und auf eine Abtriebswelle 4 führt oder eine teleskopierbare Hubspindel bis hin zum Modul, welches einen Rasenmäher oder Rasentrimmer darstellt, sodass mit einem Basisantrieb 1, welcher einen leistungsfähigen Motor 10 und Getriebe 11 aufweist, damit auch andere Aufgaben, in der Industrie, oder im do-it-yourself Bereich oder im Garten genutzt werden können.

Selbstverständlich ist die **Erfindung**nicht nur auf die gezeigten und beschriebenen Ausführungsbeispiele beschränkt.

### Bezugszeichenliste

- 1: Basisantrieb
- 2: Modul
- 3a,b,c,d,e: Dichtung
- 4: Abtriebswelle
- 4a: Wellenaufnahme
- 5: Kabeleinführungsstelle
- 6: Kolbenstange
- 7: Führungsgehäuse
- 8a,b: Schnellverschluss
- 8a: Überwurfmutter
- 8b: Aufnahmeprofil
- 9: Befestigungsauge
- 10: Motor
- 11: Getriebe
- 12: Wegmesssensor
- 13: Wegaufnehmer
- 14: Controller
- 15: Kontaktstelle
- 15a: Kontaktanschlag
- 16: Spindelhubmodul
- 17: Spindelantrieb
- 18: Öffnung
- 19: Filter
- 20: Kanal
- 21: Schlauch
- 22: Stromleitung
- 23: Verdrehsicherungsstift
- 24: Schulter
- 24a: Seegerring
- 25: Sicherheitsschraube
- 26: Untersetzungsgetriebe
- 27: elektromechanische Verriegelung
- 28: Sperrrad
- 29: Hubmagnet
- 30: Sperrstift
- 31: Notsperre
- 32: Umlenkung
- 33: Zahnradsatz
- 34: Verbindungszahnrad
- 35: oberer Teil
- 35a: unterer Teil
- 36: Drehkranz
- 37: Winkelsperre
- 38: Drehmodul
- 39: Aufnahme
- 40: Schwenkhebel
- 41: Rolle
- 42: Solarzellenhülle
- 43: Kondensator
- 44: Akkumulator
- 45: Hohlspiegel
- 46: Fernbedienung
- 47: Sensor
- 48: Gewinde
- 48a: Teilgewinde
- 49: Markierung
- 50: Bajonettverschluss
- 51: Bajonettführung
- 52: Bajonettnocken
- 53: Ausnehmung
- 54: Sensormodul
- 55: Gartenschere
- 56: Messer
- 57: Schieber
- 58: Schneidplatte
- 59: Doppelträger
- 60: Gasfeder
- 61: Gefäss
- 62: Federabdeckung
- 63: Gasfederkolbenstange
- 64: Synchronisationsgestänge
- 65: Zentralbefestigungsauge
- D: Unterbrechungsdistanz
- F: abgeflachtes Teil
- M, M1: Drehmoment
- L: Lichteinfall
- H: Hub
- W: Stromwächter

## Patentansprüche

1. Basisantrieb (1) mit koppelbarem Modul (2) wobei
der Basisantrieb (1) einen Motor (10), ein Getriebe (11), ein Aufnahmeprofil (8b) und eine Kabeleinführungsstelle (5) umfasst und die Abtriebswelle (4) mittels der Dichtung (3a) und die kontaktierte Kabeleinführungsstelle (5) mittels der Dichtung (3b) wasser- und partikeldicht gedichtet ist und der Basisantrieb (1) koppelbar mittels des Schnellverschlusses (8a,8b) mit dem Modul (2) fluchtend, zentriert, verdrehsicher ist und zwischen Basisantrieb (1) und Schnellverschluss (8a,8b) sich eine Dichtung (3d) befindet oder und dass am Basisantrieb (1) mindestens ein Filter (19) mit einem Kanal (20) angebracht ist oder und eine Kontaktstelle (15) aufweist oder und dass sich am Spindelhubmodul (16) an der Kolbenstange (6) eine Dichtung (3c), ein Filter (19) oder ein Kanal (20) und eine Überwurfmutter (8a) angebracht ist.

2. Basisantrieb (1) mit koppelbarem Modul (2) nach Anspruch 1
**dadurch gekennzeichnet,**
**dass** zwischen dem Basisantrieb (1) und dem Modul (2) sich ein Wegaufnehmer (13) mit einem Wegmesssensor (12) und einem Kontaktanschlag (15a) befindet.

3. Basisantrieb (1) mit koppelbarem Modul (2) nach Anspruch 1
**dadurch gekennzeichnet,**
**dass** am Basisantrieb (1) sich ein Verdrehsicherungsstift (23) befindet und die Überwurfmutter (8a) eine Sicherheitsschraube (25) aufweist.

4. Basisantrieb (1) mit koppelbarem Modul (2) nach Anspruch 1
**dadurch gekennzeichnet,**
**dass** sich am Aufnahmeprofil (8b) sich mindestens zwei abgeflachte Teile (F) befinden und an der Überwurfmutter (8a) die Teilgewinde (48a) oder am Aufnahmeprofil (8b) sich eine Bajonettführung (51) und an der Überwurfmutter (8a) ein Bajonettnocken (52) angebracht ist.

5. Basisantrieb (1) mit koppelbarem Modul (2) nach Anspruch 1
**dadurch gekennzeichnet,**
**dass** sich Aufnahmeprofil (8b) und Überwurfmutter (8a) ineinander schieben lassen und mittels einer Drehung die weniger als eine Umdrehung umfasst, damit das Basisantrieb (1) und das Modul (2) gekoppelt und gedichtet ist.

6. Basisantrieb (1) mit koppelbarem Modul (2) nach Anspruch 1
**dadurch gekennzeichnet,**
**dass** ein Modul (2) ein Getriebe (11) umfasst oder und einen Kanal (20) aufweist.

7. Basisantrieb (1) mit koppelbarem Modul (2) nach Anspruch 1
**dadurch gekennzeichnet,**
**dass** ein Modul (2) ein Sperrrad (28), einen Hubmagnet (29), einen Sperrstift (30), einen Kontaktanschlag (15a) und eine Notsperre (31) aufweist.

8. Basisantrieb (1) mit koppelbarem Modul (2) nach Anspruch 1
**dadurch gekennzeichnet,**
**dass** ein Modul (2) eine Aufnahme für zwei Basisantriebe (1) mit einem Abtrieb auf eine Abtriebswelle (4) aufweist.

9. Basisantrieb (1) mit koppelbarem Modul (2) nach Anspruch 1
**dadurch gekennzeichnet,**
**dass** ein Modul (2) einen Zahnradsatz (33) zur Umlenkung des Drehmomentes (M) nach (M1) aufweist oder und ein Verbindungszahnrad (34) mit einem oberen Teil (35), einem unteren Teil (35a), einem Drehkranz (36) und eine Winkelsperre (37) und ein Befestigungsauge (9) aufweist.

10. Basisantrieb (1) mit koppelbarem Modul (2) nach Anspruch 1
**dadurch gekennzeichnet,**
**dass** ein Modul (2) eine Aufnahme (39) aufweist um eine Rolle (41) oder einen Schwenkhebel (40) aufzunehmen und die Rolle (41) auch ein Zahnrad sein kann.

11. Basisantrieb (1) mit koppelbarem Modul (2) nach Anspruch 1
**dadurch gekennzeichnet,**
**dass** das Gehäuse des Basisantriebes (1) und Gehäuse der Module (2) vollständig aus Kunststoff gefertigt ist.

12. Basisantrieb (1) mit koppelbarem Modul (2) nach Anspruch 1
**dadurch gekennzeichnet,**
**dass** um den Basisantrieb (1) und dem Spindelhubmodul (16) eine Solarzellenhülle (42) oder und ein Hohlspiegel (45) angebracht ist, die Solarzellenhülle (42) mit einem Kondensator (43) oder und Akkumulator (44) verbunden ist und am Stromwächter (W) eine Fernbedienung (46) oder und Sensoren (47) angeschlossen sind.

13. Basisantrieb (1) mit koppelbarem Modul (2) nach Anspruch 1
**dadurch gekennzeichnet,**
**dass** an der Kabeleinführungsstelle (5) der Controller (14) wasserdicht gesteckt werden kann.

14. Basisantrieb (1) mit *koppelbarem* Modul (2) nach *Anspruch* 1
**dadurch gekennzeichnet,**
**dass** an der Kabeleinführungsstelle (5) oder am Spindelhubmodul (16) ein Schlauch (21) mit einem Filter (19) oder und einem Faltenbalg angebracht ist.

15. Basisantrieb (1) mit koppelbarem Modul (2) nach Anspruch 1
**dadurch gekennzeichnet,**
**dass** der Doppelträger (59) den Basisantrieb (1) und das Gefäss (61) umfasst und im Gefäss (61) eine Gasfeder (60) integriert ist, welche eine Druck- oder Zugfeder ist und auch blockierbar sein kann.

## Claims

1. A basic drive (1) with coupleable module (2),
wherein
the basic drive (1) comprises a motor (10), a transmission (11), a receiving profile (8b) and a cable insertion site (5), and the output shaft (4) is sealed by means of seal (3a) to be water- and particle-proof and the contacted cable insertion site (5) is sealed by means of seal (3b) to be water- and particle-proof, and the basic drive (1) is coupleable with the module (2) by means of the quick-acting closure (8a,8b), in a manner that is flush, centered, torsion-proof, and in that between the basic drive (1) and quick-acting closure (8a,8b) there is located a seal (3d), or/and in that at least one filter (19) with a channel (20) is mounted on basic drive (1), or/and in that a contact location (15) is present, or/and in that a seal (3c), a filter (19), a channel (20) and a coupling nut (8a) are mounted on the spindle lift module (16) on the piston rod (6).

2. The basic drive (1) with coupleable module (2) according to claim 1,
**characterized in that**
a distance sensor (13) with a distance measurement sensor (12) and a contact stop (15a) are located between the basic drive (1) and the module (2).

3. The basic drive (1) with coupleable module (2) according to claim 1,
**characterized in that**
a torsion-proofing pin (23) is located on the basic drive (1), and **in that** the coupling nut (8a) includes a security screw (25).

4. The basic drive (1) with coupleable module (2) according to claim 1,
**characterized in that**
at least two flattened parts (F) are located at the receiving profile (8b), and **in that** the partial threads (48a) are located on the coupling nut (8a), or **in that** a bayonet guide (51) is mounted on the receiving profile (8b), and **in that** a bayonet cam (52) is mounted on the coupling nut (8a).

5. The basic drive (1) with coupleable module (2) according to claim 1,
**characterized in that**
the receiving profile (8b) and coupling nut (8a) are able to glide into each other and are able to turn by less than a full rotation in order to couple and seal the basic drive (1) and the module (2).

6. The basic drive (1) with coupleable module (2) according to claim 1,
**characterized in that**
a module (2) comprises a transmission (11) or/and includes a channel (20).

7. The basic drive (1) with coupleable module (2) according to claim 1,
**characterized in that**
a module (2) includes a locking wheel (28), a lifting magnet (29), a locking pin (30), a contact stop (15a) and an emergency lock (31).

8. The basic drive (1) with coupleable module (2) according to claim 1,
**characterized in that**
a module (2) includes a receptacle for two basic drives (1) with one drive on an output shaft (4).

9. The basic drive (1) with coupleable module (2) according to claim 1,
**characterized in that**
a module (2) includes a gear set (33) for redirecting the torque (M) to (M1) and/or a connecting gear (34) with an upper part (35), a lower part (35a), a turntable (36) and an angular lock (37) as well as a mounting eye (9).

10. The basic drive (1) with coupleable module (2) according to claim 1,
**characterized in that**
a module (2) includes a receptacle (39) in order to receive a roller (41) or a rocket lever (40), and **in that** the roller (41) can also be a gear.

11. The basic drive (1) with coupleable module (2) according to claim 1,
**characterized in that**
the housing of the basic drive (1) and the housing of the module (2) are manufactured completely of plastic.

12. The basic drive (1) with coupleable module (2) according to claim 1,
**characterized in that**
a solar cell envelope (42) is mounted around the basic drive (1) and the spindle lifting module (16) or/and a concave mirror (45) is mounted, **in that** the solar cell envelope (42) is connected to a condenser (43) or/and accumulator (44), and **in that** a remote control (46) or/and sensors (47) are connected to the current relay (W).

13. The basic drive (1) with coupleable module (2) according to claim 1,
**characterized in that**
the controller (14) can be plugged in at the cable insertion site (5) in a water-proof manner.

14. The basic drive (1) with coupleable module (2) according to claim 1,
**characterized in that**
a hose (21) with a filter (19) or/and a bellows are mounted at the cable insertion site (5) or spindle lift module (16).

15. The basic drive (1) with coupleable module (2) according to claim 1,
**characterized in that**
the double carrier (59) comprises the basic drive (1) and the container (61), and **in that** a gas spring (60) is integrated in the container (61) that can be a compression spring or tension spring.

## Revendications

1. Entraînement de base (1) avec module couplable (2), dans lequel
l'entraînement de base (1) comprend un moteur (10), une transmission (11), un profil récepteur (8b) et un site d'insertion de câble (5), et où l'arbre de sortie (4) est scellé au moyen d'un joint (3a) qui doit être étanche à l'eau aux particules et où le site d'insertion de câble contacté (5) est scellé au moyen d'un joint (3b) qui doit être étanche à l'eau aux particules, et où l'entraînement de base (1) peut être couplé avec le module (2) au moyen de la fermeture à action rapide (8a, 8b), d'une manière qui est ajustée, centrée, sans torsion, et **caractérisé en ce qu'**entre l'entraînement de base (1) et la fermeture à action rapide (8a, 8b), on trouve un joint (3d), ou/et **en ce qu'**au moins un filtre (19) doté d'un canal (20) est monté sur l'entraînement de base (1) , ou/et **en ce qu'**un lieu de contact (15) est présent, ou/et **en ce qu'**un joint (3c), un filtre (19), un canal (20) et un écrou de couplage (8a) sont montés sur le module de levage à fuseau (16) sur la tige du piston (6).

2. Entraînement de base (1) avec module couplable (2) selon la Revendication 1,
**caractérisé en ce que**
un capteur de distance (13) doté d'un capteur de mesure de distance (12) et d'une butée à contact (15a) se trouvent entre l'entraînement de base (1) et le module (2).

3. Entraînement de base (1) avec module couplable (2) selon la Revendication 1,
**caractérisé en ce que**
une broche d'essai de torsion (23) se trouve sur l'entraînement de base (1) et **en ce que** l'écrou de couplage (8a) comprend une vis de sécurité (25).

4. Entraînement de base (1) avec module couplable (2) selon la Revendication 1,
**caractérisé en ce que**
au moins deux pièces aplaties (F) se trouvent au niveau du profil de réception (8b) et **en ce que** les filets partiels (48a) se trouvent sur l'écrou de couplage (8a) ou **en ce qu'**un guide à baïonnette (51) est monté sur le profil de réception (8b), et **en ce qu'**une came à baïonnette (52) est montée sur l'écrou de couplage (8a).

5. Entraînement de base (1) avec module couplable (2) selon la Revendication 1,
**caractérisé en ce que**
le profil de réception (8b) et l'écrou de couplage (8a) sont à même de glisser l'un dans l'autre pour tourner de moins d'une rotation complète en vue de coupler et de sceller l'entraînement de base (1) et le module (2).

6. Entraînement de base (1) avec module couplable (2) selon la Revendication 1,
**caractérisé en ce que**
un module (2) comprend une transmission (11) ou/et comprend un canal (20).

7. Entraînement de base (1) avec module couplable (2) selon la Revendication 1,
**caractérisé en ce que**
un module (2) comprend une roue de verrouillage (28), un aimant de levage (29), une broche de verrouillage (30), une butée de contact (15a) et un verrou d'urgence (31).

8. Entraînement de base (1) avec module couplable (2) selon la Revendication 1,
**caractérisé en ce que**
un module (2) comprend un réceptable pour deux entraînements de base (1) avec un entraînement et un arbre de sortie (4).

9. Entraînement de base (1) avec module couplable (2) selon la Revendication 1,
**caractérisé en ce que**
un module (2) comprend un ensemble de roues dentées (33) permettant de rediriger le couple (M) vers (M1) et/ou une roue dentée de connexion (34) avec une pièce supérieure (35), une pièce inférieure (35a), une plaque tournante (36) et un verrou angulaire (37), ainsi qu'un oeillet de montage (9).

10. Entraînement de base (1) avec module couplable (2) selon la Revendication 1,
**caractérisé en ce que**
un module (2) comprend un réceptacle (39) afin de recevoir un rouleau (41) ou un levier en fusée (40) et **en ce que** le rouleau (41) peut aussi être une roue dentée.

11. Entraînement de base (1) avec module couplable (2) selon la Revendication 1,
**caractérisé en ce que**
le boîtier de l'entraînement de base (1) et le boîtier du module (2) sont fabriqués entièrement en matière plastique.

12. Entraînement de base (1) avec module couplable (2) selon la Revendication 1,
**caractérisé en ce que**
une enveloppe de cellule solaire (42) est montée autour de l'entraînement de base (1) et au module de levage à fuseau (16) ou/et **en ce qu'**un miroir concave (45) est monté, **en ce que** l'enveloppe de cellule solaire (42) est connectée à un condenseur (43) ou/et à un accumulateur (44), et **en ce qu'**une télécommande (46) ou/et des capteurs (47) sont connectés au relais en cours (W).

13. Entraînement de base (1) avec module coupable (2) selon la Revendication 1,
**caractérisé en ce que**
le contrôleur (14) peut être branché au niveau du site (5) d'introduction de câble, d'une manière étanche.

14. Entraînement de base (1) avec module couplable (2) selon la Revendication 1,
**caractérisé en ce que**
un tuyau (21) doté d'un filtre (19) ou/et d'un soufflet est monté au niveau du site (5) d'introduction de câble ou du module de levage à fuseau (16).

15. Entraînement de base (1) avec module couplable (2) selon la Revendication 1,
**caractérisé en ce que**
le support double (59) comprend l'entraînement de base (1) et le récipient (61), et **en ce qu'**un ressort à gaz (60) est intégré dans le récipient (61) qui peut être un ressort de compression ou un ressort de tension.
